Europäisches Patentamt

European Patent Office

Office européen des brevets

(11) Numéro de publication: **0 352 156**
**A1**

## (12) DEMANDE DE BREVET EUROPEEN

(21) Numéro de dépôt: **89401836.5**

(22) Date de dépôt: **27.06.89**

(51) Int. Cl.⁵: **B 29 C 45/23**
**B 29 C 45/46**

(30) Priorité: **22.07.88 FR 8809937**

(43) Date de publication de la demande:
**24.01.90 Bulletin 90/04**

(84) Etats contractants désignés: **DE GB IT NL**

(71) Demandeur: **COMPAGNIE EUROPEENNE DE COMPOSANTS ELECTRONIQUES LCC**
**50, rue Jean-Pierre Timbaud**
**F-92400 Courbevoie (FR)**

(72) Inventeur: **Delalande, François**
**THOMSON-CSF SCPI Cédex 67**
**F-92045 Paris la Défense (FR)**

(74) Mandataire: **Guérin, Michel et al**
**THOMSON-CSF SCPI**
**F-92045 PARIS LA DEFENSE CEDEX 67 (FR)**

(54) **Dispositif d'injection d'une matière plastique dans un moule.**

㉗ L'invention concerne un dispositif d'injection d'une matière plastique dans un moule, le dispositif comprenant une tête d'injection (1) comportant une face d'injection pourvue d'un orifice destiné à être mis en contact avec le canal d'alimentation du moule, la tête d'injection comprenant une chambre d'injection alimentée en matière plastique par un conduit d'alimentation, l'injection de la matière plastique de la chambre d'injection vers le canal d'alimentation du moule étant effectuée par l'intermédiaire d'un système à clapet, le dispositif comprenant également un support (2) de la tête d'injection et une tige d'injection (3).

Application notamment au moulage par injection liquide d'une matière thermodurcissable.

FIG.5

EP 0 352 156 A1

**Description**

## DISPOSITIF D'INJECTION D'UNE MATIERE PLASTIQUE DANS UN MOULE

La présente invention concerne un dispositif d'injection d'une matière plastique, en particulier une matière plastique thermodurcissable, dans un moule. Elle concerne notamment l'enrobage de composants électroniques tels que les condensateurs.

Les composants électroniques tels que les condensateurs sont généralement enrobés d'une matière plastique destinée à les isoler et à les protéger de l'action des phénomènes qui pourraient nuire à leur fonctionnement : l'humidité, les agents chimiques agressifs, les chocs mécaniques ou électriques. On préfère réaliser l'enrobage des composants électroniques par une matière plastique thermodurcissable qui a l'avantage, après sa mise en oeuvre, d'être infusible et insoluble.

Les matières thermodurcissables sont des matériaux qui se transforment, par une réaction chimique, en des composés macromoléculaires tridimensionnels. Leur mise en oeuvre nécessite l'action de la chaleur. Contrairement aux matières thermoplastiques, la transformation chimique qui a conduit une matière thermodurcissable en une matière thermodurcie est irréversible. L'infusibilité des matières plastiques thermodurcies est d'une grande importance pour les composants électroniques.

On connaît différentes méthodes de moulage. Selon la méthode de moulage par compression, la matière à mouler est placée dans un moule chaud ouvert qui est ensuite fermé à l'aide d'une presse hydraulique. Sous l'action de la chaleur et de la pression imposée par la presse, la matière se fluidifie et prend la forme du moule. Cette méthode présente quelques inconvénients : immobilisations importantes de matériel, temps de cycle de moulage assez long, nécessité d'éliminer les bavures.

Selon la méthode de moulage par transfert, la matière à mouler passe d'une cavité ou pot de transfert, où la matière est comprimée et fluidifiée, à un moule chaud maintenu énergiquement fermé. Le transfert de la matière jusqu'au moule se fait grâce à des canaux usinés dans le moule. La pression exercée sur la matière pour assurer sa progression dans les canaux du moule contribue, à cause de phénomènes de friction, à son échauffement. Cette méthode procure un temps de cuisson plus court que la méthode de moulage par compression, mais la encore trop important pour la fabrication de composants électroniques à cadence élevée. Elle nécessite l'application d'une pression plus élevée.

Selon la méthode de moulage par injection, la matière thermodurcissable est d'abord fluidifiée par chauffage, puis envoyée dans un moule. Elle n'a pu être mise en oeuvre qu'après l'apparition des presses à vis. Cette méthode permet une automatisation totale de la chaîne de moulage. Il n'y a ni manipulation, ni perte de temps entre la fin de la plastification et l'injection. C'est par cette méthode qu'on obtient les temps de cuisson les plus courts. Les inconvénients que présente cette méthode concernent l'usure importante de la vis et les déchets relativement importants dus aux longueurs de carottes restant dans le moule.

Dans l'application aux composants électroniques, c'est la méthode de moulage par injection qui apparaît la plus prometteuse. Elle permet une fabrication à cadence élevée, selon un cycle de moulage entièrement automatisée. Cependant, les inconvénients énumérés plus haut font que le moulage par transfert est encore largement utilisé à partir d'une résine polyépoxyde sous forme de poudre.

La demanderesse a été amenée, afin de permettre l'automatisation complète d'une chaîne de fabrication de condensateurs, à développer un dispositif original permettant l'injection d'une matière plastique thermodurcissable destinée à remplir des boîtiers de condensateurs. Il a fallu pour cela trouver des solutions satisfaisantes pour permettre le moulage avec des pressions d'injection très faibles (0, 2 à 1 MPa), des temps très courts (de 30 à 40 secondes) de polymérisation à des températures peu élevées (environ 100°C) et une durée de vie du mélange résine-durcisseur ("pot-life" dans la terminologie anglo-saxonne) assez longue (10 à 12 heures).

Le dispositif selon l'invention permet le moulage de formules liquides, donc sans opération de pastillage et de préchauffe. Il permet le moulage de pièces très fragiles sur le plan mécanique (grâce à la faible pression d'injection) et sur le plan thermique (à cause de la basse température du moule utilisé).

Le dispositif selon l'invention répond encore à une autre exigence qui est d'éviter tout contact avec la résine liquide qui occasionne des allergies aux utilisateurs. En effet, de par sa conception, le dispositif d'injection reste propre après son utilisation et les opérations de nettoyage s'en trouvent simplifiées.

Le dispositif selon l'invention n'utilise pas de vis d'injection qui a l'inconvénient de s'user rapidement.

Bien que l'invention ait été développée pour une application particulière qui concerne les condensateurs, le dispositif d'injection peut, sans entraîner de modification que l'homme de l'art ne saurait résoudre, être utilisé dans d'autres domaines.

L'invention a donc pour objet un dispositif d'injection d'une matière plastique dans un moule, le dispositif comprenant une tête d'injection comportant une face d'injection pourvue d'un orifice destiné à être mis en contact avec le canal d'alimentation du moule, la tête d'injection comprenant une chambre d'injection alimentée en matière plastique par un conduit d'alimentation, l'injection de la matière plastique de la chambre d'injection vers le canal d'alimentation du moule étant effectuée par l'intermédiaire d'un système à clapet, le dispositif comprenant également un support de la tête d'injection, caractérisé en ce que :
- la tête d'injection est formée par une pièce creuse mobile en translation par rapport à son support, selon une course de longueur déterminée,

- une tige, dite tige d'injection, est rendue solidaire du support de tête par une première extrémité et est disposée dans la tête d'injection de façon que sa deuxième extrémité se trouve au niveau de l'orifice de la face d'injection,

- la longueur de la course de la tête d'injection par rapport à son support est déterminée d'une part par une butée du support et d'autre part par une butée de la deuxième extrémité de la tige d'injection,

- la chambre d'injection est constituée par le volume intérieur de la pièce creuse formant la tête d'injection et délimité par la tige d'injection, par la butée située à la deuxième extrémité de la tige d'injection et par des moyens d'étanchéité entre la tige d'injection et la tête d'injection,

- des moyens élastiques écartent la tête d'injection de son support jusqu'à obtenir la fermeture de l'orifice de la face d'injection lorsque la tête d'injection et la butée de la deuxième extrémité de la tige d'injection sont en contact, réalisant ainsi le système à clapet.

L'invention sera mieux comprise, et d'autres avantages apparaîtront, à la lecture de la description qui va suivre, donnée à titre non limitatif, et grâce aux figures annexées parmi lesquelles :

- les figures 1 à 4 représentent différents éléments constitutifs d'un dispositif d'injection selon l'invention,

- la figure 5 est une vue en coupe de ce dispositif d'injection,

- les figures 6 et 7 représentent un autre élément constitutif de ce dispositif d'injection,

- la figure 8 est une vue de dessus de ce dispositif d'injection,

- la figure 9 représente un autre élément constitutif de ce dispositif d'injection.

A titre d'exemple, le dispositif d'injection qui va être décrit est utilisable pour l'injection d'une matière thermodurcissable liquide dans un moule. Ceci implique que le dispositif d'injection doit être refroidi pour conserver une température de l'ordre de 20°C et que le moule doit être chauffé entre 80 et 200°C. Etant donné que, pendant l'injection, le moule sera en contact avec la tête d'injection, celle-ci doit être refroidie au plus près de la face d'injection pour éviter la polymérisation de la matière thermodurcissable à cet endroit. Ce dispositif doit donc comporter des conduits permettant la circulation d'un fluide caloporteur qui peut être tout simplement de l'eau.

Selon l'invention, l'injection de la matière plastique se fait par l'intermédiaire d'un système à clapet obtenu par l'association d'une tige d'injection solidaire d'un support et de moyens élastiques tendant à écarter la tête d'injection du support.

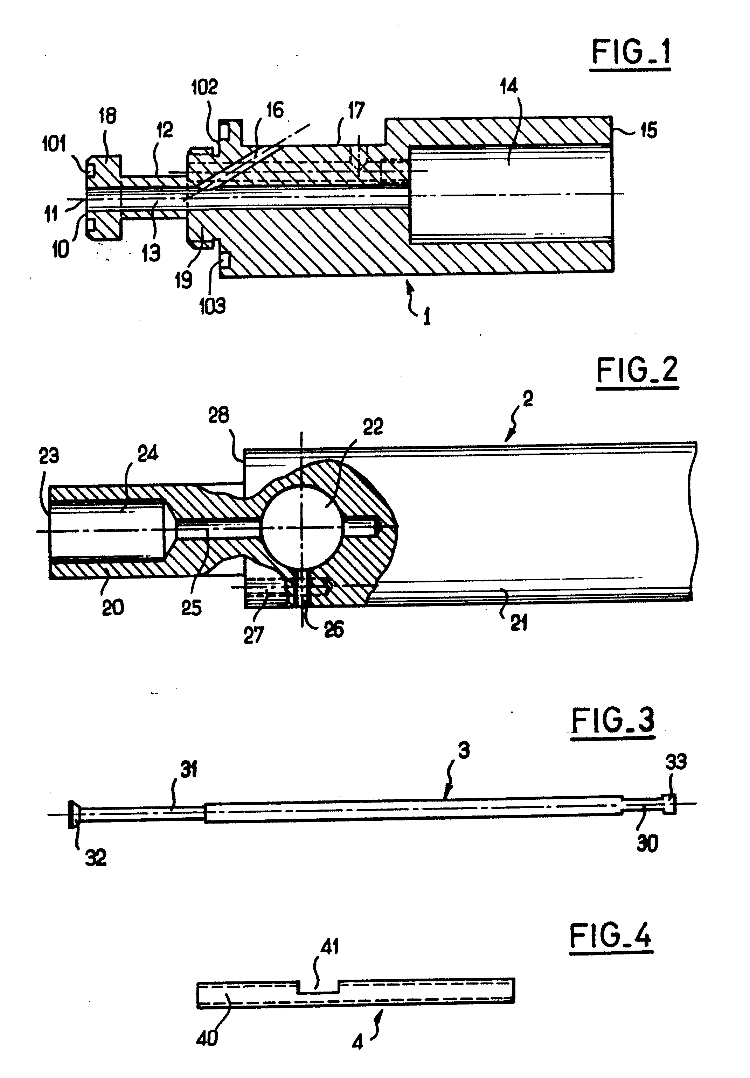

La figure 1 est une vue en coupe axiale de la tête d'injection 1 constituée, dans cet exemple, d'une pièce creuse de forme générale cylindrique, comportant une face d'injection 10 pourvue d'un orifice 11 destiné à être mis en contact avec le canal d'alimentation d'un moule. A proximité de la face d'injection 10, est située une gorge 12 assez profonde et relativement large. La partie creuse de la tête d'injection se compose de trous cylindriques disposés selon l'axe de révolution de la tête d'injection : un premier trou 13 de diamètre restreint, aboutissant d'une part à l'orifice d'injection 11 constitué par un évasement du trou 13, et prolongé d'autre part par un second trou 14 débouchant sur la face arrière 15 de la tête d'injection. La tête comprend encore un conduit d'alimentation 16 percé à partir d'un méplat 17 usiné sur la surface cylindrique de la tête, et débouchant dans le trou 13.

La gorge 12 est comprise entre deux collerettes 18 et 19 de diamètres différents. La collerette 18, limitée par la face d'injection 10, possède un diamètre inférieur à celui de la collerette 19. La face d'injection 10 possède autour de l'orifice d'injection 11, une gorge circulaire 101. La collerette 19 est filetée. A l'arrière de cette collerette, l'épaulement 102 est pourvu d'une gorge circulaire 103.

La figure 2 est une vue, partiellement en coupe, du support de la tête d'injection. Dans cet exemple, le support 2 est lui aussi cylindrique. Il comprend une partie avant 20 de diamètre plus restreint que la partie arrière 21 du support. Le support est percé d'un trou latéral 22 et, selon son axe de révolution, d'un perçage reliant la face avant 23 du support au trou latéral 22. Ce perçage, dans l'exemple considéré est constitué de deux trous de diamètres différents : un premier trou 24 débouchant sur la face avant 23 et un second trou 25 débouchant sur le trou latéral 22. D'autres trous sont encore percés dans le support le trou 26 percé et taraudé selon un axe perpendiculaire à l'axe du trou 22 et aboutissant dans ce trou, le trou 27 percé à partir de l'épaulement 28 séparant les parties avant 20 et arrière 21 du support. Les fonctions de ces trous apparaîtront lors de l'examen du dispositif d'injection assemblé. L'extrémité arrière de la partie 21, qui n'a pas été représentée, est usinée de façon à pouvoir fixer le dispositif sur un bâti par exemple.

La figure 3 représente la tige d'injection du dispositif. La tige d'injection 3 comprend à l'une de ses extrémités une partie aplatie 30 qui servira à rendre la tige solidaire du support. L'usinage de cette partie a consisté dans le cas présent à réaliser deux méplats symétriquement par rapport à l'axe de la tige. L'autre extrémité de la tige 3 comprend une partie 31 de diamètre réduit par rapport au reste de la tige. Cette partie 31 est terminée par une partie évasée 32. La tige d'injection peut être en acier nitruré.

La figure 4 représente un élément du dispositif, appelé tube injecteur, qui est destiné à être placé, en force ou glissant juste, dans la tête d'injection et dans lequel coulissera la tige d'injection. Le tube injecteur 4 est un cylindre percé de part en part d'un trou 40. Une entaille 41 est pratiquée perpendiculairement à son axe pour donner accès au trou 40. La longueur du tube injecteur 4 peut correspondre à la la longueur du trou 13 de la tête d'injection. Le tube injecteur peut être en acier nitruré.

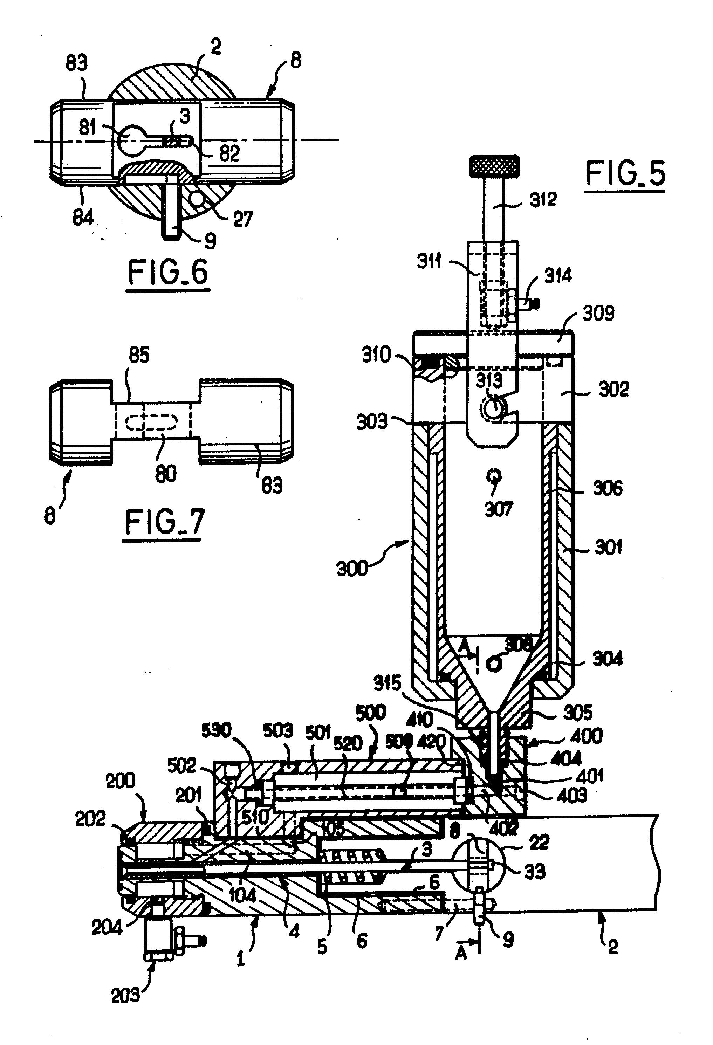

La figure 5 est une vue en coupe d'un dispositif d'injection selon l'invention. Ce dispositif comprend la tête d'injection 1, le support de tête 2, la d'injection 3 et d'autres éléments.

Certains éléments du dispositif d'injection doivent être montés selon un ordre précis. Le tube injecteur 4, recouvert ou non de colle, sera d'abord placé dans la tête d'injection 1 et orienté de façon que son entaille 41 soit en face de l'arrivée du conduit 16 dans le trou 13. Le tube injecteur 4 et le trou 13 de la tête d'injection ont été usinés de façon qu'une simple couche de colle assure une parfaite étanchéité entre eux. Une fois le tube injecteur installé dans la tête d'injection, la tige d'injection peut être mise en place.

La tête d'injection 1 est placée sur le support 2 par introduction de la partie avant 20 du support dans le trou 14 de la tête, le trou 24 du support contenant un ressort 5. La tête d'injection 1 étant par exemple en aluminium et le support 2 étant par exemple en acier, on peut prévoir des douilles 6 en bronze ou en acier pour assurer le guidage de la tête sur le support. Une goupille 7 placée dans le logement constitué par deux trous borgnes se faisant face (l'un dans la tête et l'autre dans le support et portant la référence 27 sur la figure 2) n'autorise que le mouvement en translation de la tête par rapport au support.

La tige d'injection 3 passe glissant juste dans le tube injecteur, avec un certain jeu dans le trou 25 du support et aboutit dans le trou 22 du support. Elle a été introduite de façon que sa partie usinée 30 soit dans le trou 22 et que sa partie évasée 32 soit au niveau de l'orifice d'injection 11. La tige 3 est rendue solidaire du support 2 au moyen d'un coulisseau de verrouillage 8.

La figure 6 est une vue selon la coupe AA de la figure 5 et qui montre le coulisseau de verrouillage 8 en position dans le support 2 et assurant sa fonction de fixation de la tige d'injection 3. La figure 7 est une vue de dessus de la figure 6 et représente le coulisseau de verrouillage seul. Le coulisseau comporte une partie centrale rétrécie 80 percée d'un logement constitué par l'association d'un trou circulaire 81 et d'une fente 82. La fixation de la tige d'injection 3 se fait en plaçant d'abord le coulisseau 8 dans le support 2 de façon que le trou circulaire 81 soit dans l'axe du support et par conséquent dans l'axe de la tige d'injection. Il faut remarquer que le coulisseau 8 possède deux faces opposées 83 et 84 arrondies au diamètre du trou 22, ce qui fait que le coulisseau 8 ne peut qu'être déplacé en translation dans ce trou. Le ressort 5 tend à écarter la tête d'injection 1 du support 2. En position de repos (cas de la figure 5), il existe un certain jeu (environ 0,5 mm) entre la tête d'injection et son support. En poussant l'ensemble tête d'injection-tige vers le support, le ressort est comprimé et l'extrémité 33 de la tige 3 passe derrière la face arrière 85 du coulisseau 8. Le coulisseau est alors poussé plus en avant dans le support ce qui a pour conséquence de faire entrer la partie aplatie 30 de la tige , correctement orientée, dans la fente 82. La largeur de la fente 82 permettant le passage de la partie aplatie 30 mais empêchant celui de l'extrémité 33, la tige d'injection est ainsi rendue solidaire du support 2. Une vis à téton 9 vissée dans le trou taraudé 26 assure une fixation sûre du coulisseau 8 sur le support. Dans la position de repos du dispositif (cas de la figure 5), le ressort 5 écarte du support 2 la tête d'injection 1 qui est alors retenue par la butée que constitue la partie évasée 32 de la tige d'injection. Le coulisseau de verrouillage peut être en acier au chrome.

Le dispositif d'injection comporte aussi une bague 200 qui se visse sur la collerette filetée 19. L'étanchéité entre la bague 200 et la collerette 19 est assurée grâce à un joint torique 201 logé dans la gorge 103. Un autre joint torique 202, logé dans une gorge interne de la bague 200, assure l'étanchéité entre la bague et la collerette 18. Ainsi, à proximité de l'orifice d'injection existe une cavité pouvant contenir un liquide de refroidissement qui peut circuler entre un embout 203, vissé dans un trou taraudé 204 de la bague 200, et un conduit percé dans la tête d'injection et formé de deux trous 104 et 105 communicants. Le trou 104 aboutit dans la gorge 12 et le trou 105 est percé à partir du méplat 17. La bague peut être en acier au chrome.

Le dispositif d'injection comporte également un réservoir à matière thermodurcissable 300 dont quelques parties sont représentées en coupe et d'autres non. Le réservoir 300 comprend une enveloppe 301 dans laquelle est plongée la plus grande partie d'une cuve 302. Le haut de l'enveloppe 301 est vissé sur une partie filetée de la cuve. L' étanchéité entre la cuve et l'enveloppe est assurée à ce niveau par le joint torique 303. Le bas de la cuve 302 repose selon une surface annulaire sur le fond de l'enveloppe 301 et l'étanchéité à ce niveau est assuré par le joint torique 304. La cuve débouche du bas de l'enveloppe par une partie 305 en forme d'entonnoir. Le corps de la cuve 302 comporte un évidement superficiel 306 sur une certaine hauteur de façon à constituer une cavité entre la cuve et l'enveloppe. Deux trous taraudés 307 et 308 constituent des entrée et sortie pour un fluide de refroidissement circulant dans la cavité 306. Un couvercle 309 ferme la cuve avec interposition d'un joint torique d'étanchéité 310 logé dans une gorge annulaire de la cuve. Une bride 311, équipée d'une vis de serrage 312 et s'articulant sur deux tourillons 313 solidaires de la cuve, assure une fermeture efficace de la cuve résistant à des pressions d'injection de l'ordre de 1 MPa. Le fluide fournissant la pression d'injection est introduit dans la cuve par l'intermédiaire d'un embout 314 traversant le couvercle 309. La partie 305 en forme d'entonnoir est prolongée d'un col 315 creux qui se visse sur un élément 400 du dispositif d'injection. Le réservoir peut être réalisé en acier au chrome.

L'élément 400 est un raccord renvoi d'angle entre le réservoir 300 et un élément prolongateur 500. Il est percé de deux trous 401 et 402 communicants et perpendiculaires entre eux. Le trou 402 traverse l'élément 400 de part en part pour faciliter le nettoyage de l'élément. Un bouchon 403 obture l'extrémité du trou 402 pendant le fonctionnement du dispositif d'injection. Un joint torique 404 assure l'étanchéité de la liaison entre le réservoir 300 et le raccord 400. Le trou 401 assure la communication avec la cuve 302 par l'intermédiaire du col 315. Le raccord 400 est fixé au prolongateur 500 par l'intermédiaire de vis non représentées. Il peut être réalisé en acier au chrome.

Le prolongateur 500 a pour fonction principale de dégager la tête d'injection 1. Le volume important occupé par le réservoir 300 se trouve ainsi reporté vers l'arrière. Il est percé de plusieurs trous : un trou principal 501 sur presque toute sa longueur et comprenant trois portions de diamètres décroissants, un trou traversant 502 communicant avec la dernière portion du trou 501 et percé perpendiculairement au trou 501, des trous 503 et 508 et d'autres trous qui serviront à la fixation du prolongateur 500 sur la tête d'injection 1. Le trou 502 est aussi destiné à communiquer avec le conduit d'alimentation 16 de la tête d'injection. Le trou 503 est destiné à faire communiquer la première portion du trou 501 avec le trou 105 percé dans la tête d'injection. Le trou 508 percé sur le côté du prolongateur aboutit dans la première portion du trou 501. Un tuyau souple, extérieur au dispositif et non représenté, permet de réunir le trou 308 au trou 508. Le prolongateur peut être réalisé en acier au chrome.

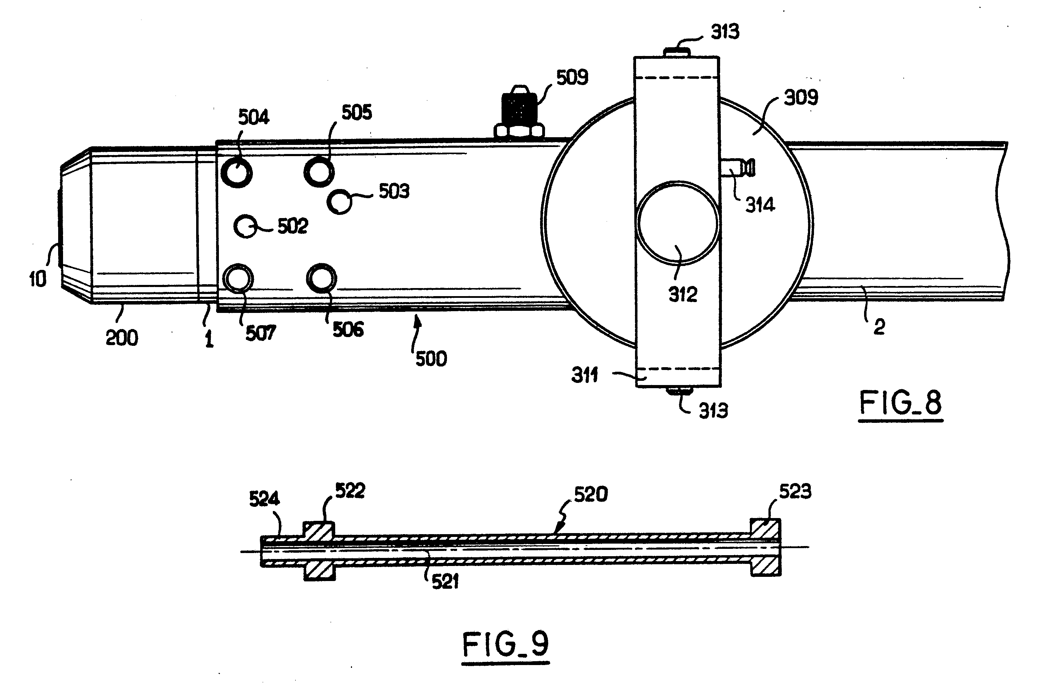

La figure 8 est une vue de dessus du dispositif représenté à la figure 5. On remarque la position décalée des trous 502 et 503. Cette position décalée est due au fait que les conduits auxquels ils permettent l'accès doivent se croiser dans la tête d'injection sans communiquer entre eux. Les trous 502 et 503 sont représentés sans leurs bouchons de fermeture. Les quatre autres trous, référencés 504 à 507, sont destinés au passage de vis de fixation du prolongateur sur la tête d'injection. Un joint d'étanchéité 510 est interposé entre la tête d'injection 1 et le prolongateur 500. Cette figure rend visible l'embout 509 donnant accès au trou 508.

Le prolongateur 500 comprend également, à l'intérieur du trou 501, un tube 520 (voir la figure 5) qui est repris seul à la figure 9. Le tube 520, percé de part en part d'un trou 521, comporte une collerette 523 à l'une de ses extrémités et une collerette 522 un peu en retrait de son autre extrémité 524. La mise en place du tube 520 se fait en introduisant d'abord l'extrémité 524, sur laquelle a été monté un joint torique d'étanchéité 530 mis en butée contre la collerette 522, dans la dernière portion du trou 501. La collerette 522 se loge dans la deuxième portion du trou 501. La collerette 523 est engagée dans un avant-trou du trou 402 dans lequel a été disposé auparavant un joint torique 410. Enfin, entre le raccord 400 et le prolongateur 500 est placé un joint d'étanchéité 420. Il existe alors dans le prolongateur 500 deux circuits possibles de circulation de fluides sans interférence l'un avec l'autre grâce à l'utilisation de joints d'étanchéité.

Le circuit de la matière thermodurcissable est constitué par la cuve 302 comprenant la partie 305 en forme d'entonnoir, les trous 401 et 402 du raccord 400, le trou 521 du tube 520, la dernière portion du trou 501 et le trou 502 du prolongateur 500, le conduit d'alimentation 16 et la chambre d'injection situés dans la tête d injection 1. La chambre d'injection est constituée par l'espace annulaire délimité par la partie 31 de la tige d'injection 3 et le tube injecteur 4.

Le circuit de refroidissement est constitué par la cavité 306 du réservoir 300, le tuyau reliant les trous 308 et 508, l'espace annulaire compris entre la paroi du trou 501 du prolongateur et la portion du tube 520 comprise entre les collerettes 522 et 523, le trou 503 du prolongateur, les trous 105 et 104 et la gorge 12 de la tête d'injection, le trou 204 de la bague 200.

Le dispositif d'injection d'une matière thermodurcissable selon l'invention permet de conserver la matière thermodurcissable à une température convenable pour éviter sa polymérisation dans la chambre d'injection grâce à la présence à proximité immédiate d'un volume important de fluide caloporteur.

Les moyens d'étanchéité entre la tige d'injection 3 et le tube injecteur 4 sont réalisés par l'ajustement serré entre ces deux pièces dont le déplacement relatif est très faible (par exemple 0,5 mm).

En position de repos, le ressort 5 pousse la tête d'injection 1 en butée sur la partie évasée 32. L'orifice d'injection est alors obturé par application de la partie évasée 32 sur l'entrée du tube injecteur 4 qui est chanfreinée en conséquence.

Le dispositif d'injection peut s'adapter sur une presse classique verticale dont l'automatisme comporte deux temporisations : une temporisation accostage et une temporisation cuisson. La temporisation accostage correspond au temps pendant lequel la tête d'injection est en contact avec le moule (temps de gélification). La temporisation cuisson correspond au temps de fermeture du moule (temps de polymérisation). L'avance et le recul du dispositif d'injection peuvent s'effectuer par l'intermédiaire d'un vérin commandé en fin de fermeture presse (seuil de pression). La tête d'injection est pourvue d'un joint torique d'étanchéité logé dans la gorge circulaires 101 de la face d'injection 10. Ce joint doit avoir une bonne tenue mécanique au solvant de nettoyage et peut être constitué de caoutchouc synthétique à base de copolymère de fluorure de vinylidène et d'hexafluoropropylène, par exemple du type de la marque déposée Viton.

En fonctionnement, la tête d'injection 1 est pressée contre le moule, l'orifice d'injection 11 étant situé devant le canal d'alimentation du moule. Ceci provoque la mise en contact de l'épaulement 28 du support 2 avec la face arrière 15 de la tête d 'injection 1, ainsi que la compression du ressort 5. Le support 2 entraîne la tige d'injection 3 vers la face d'injection et la matière thermodurcissable peut fluer dans le moule. On a ainsi réalisé un système à clapet automatique. Ceci permet de garder la matière thermodurcissable sous pression permanente dans le réservoir 300.

Les moules utilisables peuvent être soit des moules en deux parties avec injection dans le plan de joint des pièces à mouler et évents également dans le plan de joint, soit des moules en trois parties avec injection par le plan de joint inférieur et évents dans le plan de joint supérieur. Le moule en trois parties donne un meilleur moulage dans le cas de pièces plus hautes que larges et dans tous les cas apporte un décarottage automatique. Que les moules soient en deux ou trois parties, des évents d'environ 0,02 mm sont suffisants.

Pour pouvoir régler un gradient de température entre la tête et le moule permettant une gélification correcte et par conséquent un nettoyage facilité du moule, on peut prévoir un point chaud à l'endroit de l'injection. Ce point chaud peut être obtenu au moyen d'une résistance chauffante placée juste sous la surface du moule et à proximité immédiate du canal d'alimentation.

La matière thermodurcissable employée peut être à base de résines époxydes du type DGEBA (diglycidyl éther du bisphénol A) ou de novolaques époxydées. Une composition type peut comprendre un mélange de 90 % en poids de Bakelite 0451 pour 10 % en poids de Rutapox 0302 auquel on peut ajouter des charges et des adjuvants classiques. La rapidité de polymérisation, alliée à une longue durée de vie en pot, est rendue possible par l'utilisation de catalyseurs latents parmi lesquels on peut citer : les complexes aminés à base de trifluorure de bore, les sels d'ammonium quaternaire, les dérivés amino-phénoliques.

Le dispositif selon l'invention peut également être utilisé pour l'injection de matières thermoplastiques. Dans ce cas, au lieu de prévoir un circuit de refroidissement de la la matière à injecter, il faut au contraire prévoir des moyens de chauffage de la tête (par résistances électriques par exemple). Le moule est alors froid ou tiède.

## Revendications

1 - Dispositif d'injection d'une matière plastique dans un moule, le dispositif comprenant une tête d'injection (1) comportant une face d'injection (10) pourvue d'un orifice (11) destiné à être mis en contact avec le canal d'alimentation du moule, la tête d'injection comprenant une chambre d'injection alimentée en matière plastique par un conduit d'alimentation (16), l'injection de la matière plastique de la chambre d'injection vers le canal d'alimentation du moule étant effectuée par l'intermédiaire d'un système à clapet, le dispositif comprenant également un support (2) de la tête d'injection, caractérisé en ce que :
- la tête d'injection (1) est formée par une pièce creuse mobile en translation par rapport à son support, selon une course de longueur déterminée,
- une tige (3), dite tige d'injection, est rendue solidaire du support de tête (2) par une première extrémité et est disposée dans la tête d'injection de façon que sa deuxième extrémité se trouve au niveau de l'orifice (11) de la face d'injection,
- la longueur de la course de la tête d'injection par rapport à son support est déterminée d'une part par une butée (28) du support et d'autre part par une butée (32) de la deuxième extrémité de la tige d'injection,
- la chambre d'injection est constituée par le volume intérieur de la pièce creuse formant la tête d'injection et délimité par la tige d'injection (3), par la butée (32) située à la deuxième extrémité de la tige d'injection (3) et par des moyens d'étanchéité entre la tige d'injection et la tête d'injection,
- des moyens élastiques écartent la tête d'injection (1) de son support (2) jusqu'à obtenir la fermeture de l'orifice de la face d'

injection lorsque la tête d'injection et la butée (32) de deuxième extrémité de la tige d'injection (3) sont en contact, réalisant ainsi le système à clapet.

2 - Dispositif d'injection selon la revendication 1, caractérisé en ce qu'un tube dit tube injecteur (4) est disposé à l'intérieur de la tête d'injection (1), la tige d'injection (3) passant dans ce tube injecteur qui possède une entaille (41) permettant la communication entre le conduit d'alimentation (16) et la chambre d'injection, les moyens d'étanchéité entre la tige d'injection et la tête d'injection étant assurés d'une part par l'ajustement en force et/ou le collage du tube injecteur dans la tête d'injection et, d'autre part, par le coulissement de type glissant juste de la tige d'injection (3) dans le tube injecteur (4).

3 - Dispositif d'injection selon l'une des revendications 1 ou 2, caractérisé en ce que lesdits moyens élastiques sont constitués par un ressort (5) disposé dans un trou (24) du support (2) et appliquant son action sur la tête d'injection (1).

4 - Dispositif d'injection selon l'une quelconque des revendications 1 à 3, caractérisé en ce que la matière plastique à injecter est contenue dans un réservoir (300) disposant d'une arrivée (314) de fluide sous pression, le réservoir étant relié audit conduit d'alimentation (16).

5 - Dispositif d'injection selon la revendication 4, caractérisé en ce que la liaison entre le réservoir (300) et le conduit d'alimentation (16) se fait par l'intermédiaire d'un prolongateur (500) permettant le retrait du réservoir par rapport à la face d'injection (10).

6 - Dispositif d'injection selon l'une des revendications 4 ou 5, caractérisé en ce qu'un raccord (400) supporte le réservoir (300) et permet le transit de la matière plastique vers le conduit d'alimentation (16).

7 - Dispositif d'injection selon l'une quelconque des revendications 1 à 6, caractérisé en ce que, le dispositif étant destiné à l'injection d'une matière thermodurcissable, un circuit de refroidissement du dispositif par circulation d'un fluide caloporteur est prévu.

8 - Dispositif d'injection selon la revendication 7, caractérisé en ce que le circuit de refroidissement est constitué de cavités (306, 12) et de trous (501, 503, 105, 104, 204) prévus dans les différents éléments constituant le dispositif.

## FIG_1

## FIG_2

## FIG_3

## FIG_4

FIG_5

FIG_6

FIG_7

FIG_8

FIG_9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 108 572  (OWENS-ILLINOIS)<br>* Page 6, ligne 33 - page 9, ligne 17; figures 1,2 * | 1,3 | B 29 C  45/23<br>B 29 C  45/46 |
| Y |  | 4,5,7 | |
| Y | GB-A-2 198 386  (HARPER)<br>* En entier * | 4,5,7 | |
| Y | US-A-3 843 293  (HARVILLE)<br>* En entier * | 4 | |
| A | EP-A-0 011 805  (OSAKA CITY)<br>* En entier * | 1 | |

**DOMAINES TECHNIQUES RECHERCHES (Int. Cl.5)**

B 29 C

Le présent rapport a été établi pour toutes les revendications

| Lieu de la recherche | Date d'achèvement de la recherche | Examinateur |
|---|---|---|
| LA HAYE | 19-10-1989 | BOLLEN J.A.G. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P0402)